Europäisches Patentamt

European Patent Office

Office européen des brevets

(19)

(11) Numéro de publication : **0 128 819**
**B1**

(12) **FASCICULE DE BREVET EUROPÉEN**

(45) Date de publication du fascicule du brevet :
10.09.86

(51) Int. Cl.⁴ : **F 01 D 21/04**

(21) Numéro de dépôt : 84401150.2

(22) Date de dépôt : 06.06.84

(54) Structure de rétention pour carter de turbomachine.

(30) Priorité : 09.06.83 FR 8309552

(43) Date de publication de la demande :
19.12.84 Bulletin 84/51

(45) Mention de la délivrance du brevet :
10.09.86 Bulletin 86/37

(84) Etats contractants désignés :
DE FR GB

(56) Documents cités :
EP-A- 0 030 179
FR-A- 2 514 823
US-A- 3 974 313
US-A- 4 057 359

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **Bouilier, Jean Georges**
**10, rue Kleber**
**F-91800 Brunoy (FR)**
Inventeur : **Soligny, Marcel Robert**
**136, boulevard Jean Mermoz**
**F-94150 Chevilly-Larue (FR)**

(74) Mandataire : **Moinat, François**
**S.N.E.C.M.A. Service des Brevets Boîte Postale 81**
**F-91003 Evry Cedex (FR)**

EP 0 128 819 B1

# Description

L'invention concerne une structure de rétention pour carter de turbomachine comportant un anneau, entourant un étage d'aubes rotatives, constitué d'une ou de plusieurs couches de matériaux disposés concentriquement susceptibles d'absorber l'énergie de fragments de disque d'aubes ou d'aubes provenant d'une rupture lors du fonctionnement et de les retenir.

La rupture d'aubes ou l'éclatement des disques portant les aubes risque de provoquer des dommages graves aux organes vitaux de l'appareil. Afin d'en diminuer les conséquences, on a mis en place, autour du carter, des structures capables d'absorber l'énergie des fragments et de les retenir dans l'enceinte moteur.

Une des premières solutions a consisté à renforcer le carter soit par épaississement du métal dans la zone annulaire entourant les aubes mobiles, soit par remplacement d'une portion de carter par un anneau en un métal de résistance mécanique élevée. On évitait ainsi l'éjection des fragments, mais ceux-ci, maintenus dans le carter, provoquaient des ruptures en chaîne. En outre, la masse de la turbomachine était sensiblement augmentée.

Une autre solution décrite dans le brevet français 2 375 443 consiste à entourer l'étage d'aubes d'un anneau de rétention en un matériau de résistance mécanique de poids spécifique élevé. L'anneau est supporté par l'intermédiaire de goupilles dans un organe annulaire fixé au bâti de la turbomachine. Lors d'un impact les goupilles sont cisaillées et l'énergie de rotation du fragment projeté est absorbée par rotation de l'anneau.

Cette structure a permis de diminuer les risques de rupture en chaîne par l'éloignement de l'anneau et d'avoir une meilleure efficacité d'arrêt. Toutefois, comme dans l'exemple précédent, cette solution est lourde et encombrante et ce dernier inconvénient le rend difficilement utilisable dans des secteurs de la turbomachine où l'encombrement doit être impérativement le plus faible possible.

Les efforts des constructeurs ont porté jusqu'à présent sur un allègement de la structure et une simplification de la réalisation mécanique. C'est ainsi que le brevet français 2 470 269 montre une structure de rétention comportant radialement de l'intérieur vers l'extérieur un anneau d'étanchéité amovible constitué d'un support revêtu d'une couche d'usure, une structure de type sandwich composée d'un nid d'abeilles entre deux peaux, la peau intérieure étant métallique et la peau extérieure en résine synthétique armée d'un tissu de fibres de verre, et enfin une couche extérieure de renforcement en un matériau composite fibreux constitué d'un bobinage de fibres immobilisées dans une résine synthétique.

Cette structure permet un allègement substantiel de la structure tout en conservant un pouvoir de rétention maximal pour des débris à grande vitesse tangentielle. Toutefois, il n'est pas possible de réaliser un bobinage continu de fibres dans le secteur occupé par le support d'équipement, ni même de disposer des couches de matériau nid d'abeilles entre le carter et le support.

L'invention propose la réalisation d'une structure de rétention complexe susceptible d'être utilisée même dans des secteurs où la présence d'équipements ne permet pas de disposer de structures de rétention épaisses. C'est en particulier le cas de la zone entourant les aubes de soufflante d'un réacteur double flux et plus particulièrement du secteur dans lequel se trouve le support d'équipement, celui-ci devant être protégé contre l'impact éventuel d'un fragment provenant de la soufflante.

La structure de rétention pour carter de turbomachine, selon l'invention est remarquable en ce que l'anneau de rétention a une constitution circonférentielle complexe comportant un premier secteur cylindrique en un matériau métallique à haute résistance mécanique destiné à protéger un organe fixé sur le carter, le secteur complémentaire de l'anneau étant constitué par une structure en nid d'abeilles maintenue entre une peau interne formant avec le premier secteur cylindrique un anneau cylindrique monobloc continu, la partie correspondant au premier secteur cylindrique étant formée par un épaississement et une peau externe en un matériau composite, en ce qu'une sangle en un matériau à haut module élastique enserre au moins le secteur complémentaire, la sangle comportant à ses extrémités des moyens de fixation constitués de boucles, la sangle et ses boucles d'extrémité étant formées par bobinage continu d'une fibre à haut module d'élasticité, le bobinage étant aplati dans sa région centrale de manière à laisser subsister à ses extrémités des boucles.

Les explications et figures données ci-après à titre d'exemple permettront de comprendre comment l'invention peut être réalisée.

La figure 1 est une vue en coupe axiale, avec arrachement partiel, d'une première forme de réalisation de la structure selon l'invention.

La figure 2 est une demi-vue en coupe radiale selon IIII de la figure 1.

La figure 3 est une vue en coupe axiale d'une deuxième forme de réalisation de la structure selon l'invention.

La figure 4 est une demi-coupe radiale selon IV IV de la figure 3.

La figure 5 est une vue des moyens de fixation selon V de la figure 3.

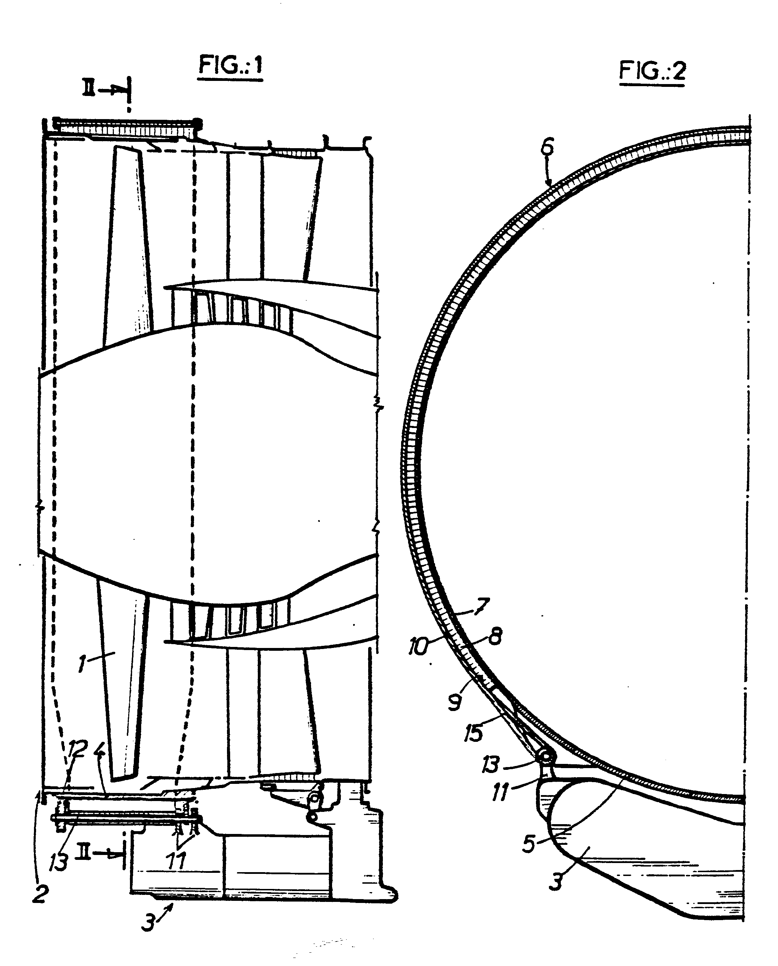

Les exemples de réalisation de la structure de rétention selon l'invention montrée sur les figures 1 à 4 sont plus particulièrement adaptés au carter d'une soufflante de réacteur double flux. La soufflante montée à l'entrée du turboréacteur comporte des aubes 1 de grandes dimensions entraînées par un arbre de turbine. Du fait de sa position et de ses dimensions, la soufflante est plus que les autres parties de la turbomachine sujette à subir des dommages dus entre autres à l'aspiration de corps étrangers. Il peut s'ensuivre des ruptures d'aubes dont les fragments sont susceptibles de traverser le carter 2 et d'atteindre des organes essentiels. C'est le cas notamment dans des moteurs dont le support d'équipement 3 est fixé en arc de cercle directement sur le carter.

La structure de rétention, selon l'exemple de réalisation montré sur les figures 1 et 2, forme un anneau 4 correspondant au moins à la partie de carter balayé radialement par les aubes. L'anneau présente une constitution radiale et circonférentielle complexe.

La partie d'anneau s'étendant approximativement au droit du support d'équipement, fixé à proximité immédiate du carter est constitué d'un secteur cylindrique 5 en un matériau à haute résistance mécanique d'une épaisseur suffisante pour ne pas être traversée par les fragments d'aubes. Ce secteur peut par exemple être formé par un épaississement de la paroi métallique du carter ou par un segment cylindrique métallique fixé sur la partie de carter correspondante. Le secteur complémentaire 6 de l'anneau comporte radialement de l'intérieur vers l'extérieur :

une peau interne 7, par exemple métallique,

une structure nid d'abeilles 8 collée sur la peau interne,

une peau externe 9 en un matériau composite formé par exemple de couches de fibres noyées dans une résine synthétique,

une sangle 10, constituée de fibres à haut module élastique, dont les extrémités sont maintenues par des moyens de fixation, une partie desdits moyens pouvant être fixée directement ou indirectement sur le carter, enserrant au moins le secteur complémentaire 6 d'anneau.

Selon l'exemple des figures 1 et 2, les moyens de fixation sont constitués par des oreilles dont deux 11 sont solidaires des extrémités du support d'équipement 3 et deux autres 12 du carter 2, et par deux jumelles 13. Des boucles 15 sont prévues aux extrémités de la sangle, et retenues par les jumelles 13.

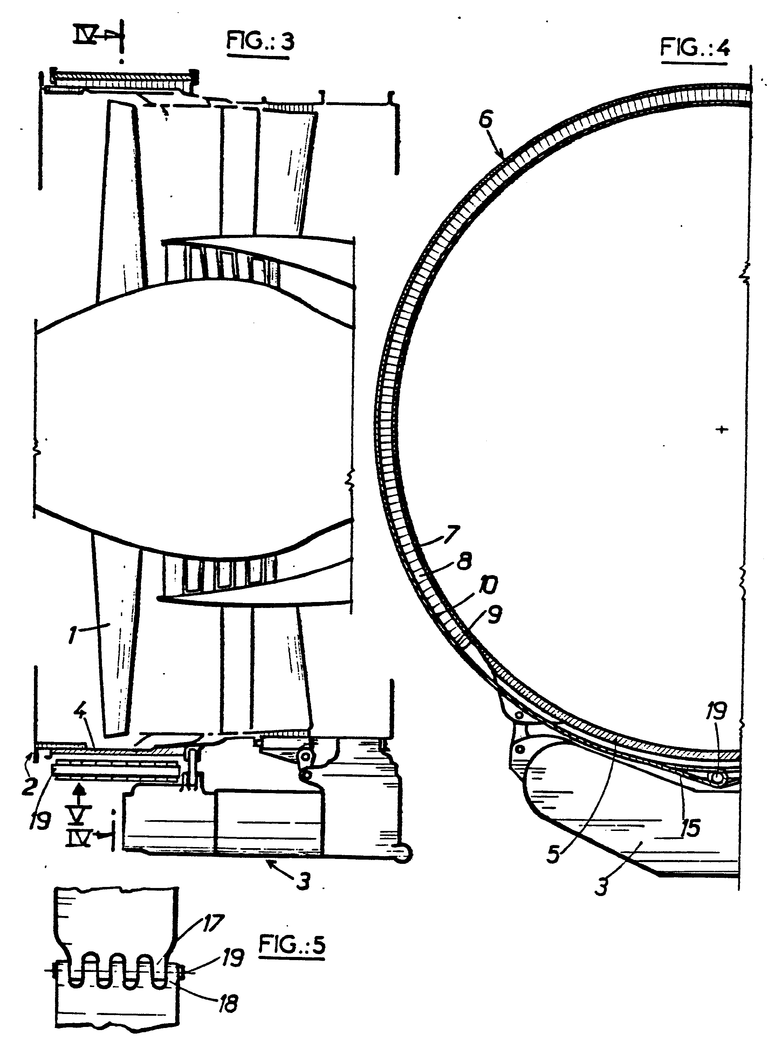

Selon l'exemple des figures 3 et 4, les moyens de fixation représentés figure 5, sont constitués de deux peignes 17, 18 des boucles formées aux extrémités de la sangle, et d'un axe de jonction 19 passant dans les boucles. Par exemple, les sangles sont formées par bobinage de fibres, du type polyimide, sur un mandrin, le bobinage est aplati dans sa partie centrale de manière à constituer des boucles à ses extrémités.

Les structures de rétention selon l'invention conviennent dans tous les cas, où un organe est fixé sur le carter de soufflante ou de compresseur et que la distance séparant ledit organe de la paroi est trop faible pour permettre l'utilisation d'une structure classique circonférentiellement homogène.

Bien entendu, des variantes peuvent être employées sans sortir du cadre de la présente invention ; notamment dans la mesure où l'encombrement disponible au droit du support d'équipement 3 est trop petit pour qu'on puisse employer un carter de rétention homogène périphériquement du type du secteur complémentaire 6, mais suffisant pour qu'on puisse intercaler entre paroi intérieure 7 de l'anneau de rétention et support d'accessoires 3, un élément capable d'absorber une partie de l'énergie du choc sur la partie 5 de l'anneau, on pourra interposer un tel élément, par exemple, un matériau sandwich d'épaisseur radiale plus petite que celle figurant en 8 sur la figure 4 et diminuer corrélativement l'épaisseur de la partie 5 de l'anneau de 4, au bénéfice de la masse, la partie 5 de l'anneau 4 restant cependant d'une épaisseur notablement plus élevée que celle de la partie 7 de l'anneau de rétention.

**Revendications**

1. Structure de rétention pour carter de turbomachine comportant un anneau, entourant un étage d'aubes rotatives, ledit anneau étant constitué d'une ou plusieurs couches de matériaux disposées concentriquement, susceptibles d'absorber l'énergie des fragments de disques d'aubes ou d'aubes provenant d'une rupture lors du fonctionnement et de les retenir, caractérisée en ce que l'anneau (4) a une constitution circonférentielle complexe comportant un premier secteur cylindrique (5) en un matériau métallique à haute résistance mécanique destiné à protéger un organe (3) fixé sur le carter, le secteur complémentaire (6) de l'anneau étant constitué par une structure en nid d'abeilles (8) maintenue entre une peau interne (7) formant avec le premier secteur cylindrique (5) un anneau cylindrique monobloc continu, la partie correspondant au premier secteur cylindrique (5) étant formée par un épaississement et une peau externe (9) en un matériau composite, en ce qu'une sangle (10) en un matériau à haut module élastique enserre au moins le secteur complémentaire (6), la sangle (10) comportant à ses extrémités des moyens de fixation (11 à 15) constitués de boucles, la sangle (10) et ses boucles d'extrémités (15) étant formées par bobinage continu d'une fibre à haut module d'élasticité, le bobinage étant aplati dans sa région centrale de manière à laisser subsister à ses extrémités des boucles (15).

2. Structure selon la revendication 1, caractérisée en ce que la fibre est une fibre du type polyimide.

3. Structure selon l'une des revendications 1 et 2, caractérisée en ce que les moyens de fixation sont constitués de deux boucles (15) formées aux extrémités de la sangle, coopérant par des jumelles (13) à des oreilles (11-12), au moins deux oreilles (11) étant fixées aux extrémités de l'organe (3) à protéger et deux autres (12) au carter.

4. Structure selon l'une des revendications 1 et 2 caractérisée en ce que les moyens de fixation sont constitués de deux peignes (17-18) de boucles formés aux extrémités de la sangle (10) et d'un axe de jonction (19) passant dans les boucles.

## Claims

1. Retaining structure for the casing of a turbo jet engine comprising an annulus, surrounding one stage of rotary blades, the said annulus being constituted by one or more layers of material disposed concentrically, capable of absorbing energy of fragments of discs of blades or of blades arising from rupture during operation and of retaining them, characterized in this that the annulus (4) has a complex circumferential structure comprising a first cylindrical sector (5) of a metallic material having high mechanical strength intended to protect a member (3) secured to the casing, the complementary sector (6) of the annulus being constituted by a honeycomb structure (8) held between an internal skin (7) forming with the first cylindrical sector (5) a continuous monobloc ring, the corresponding part of the first cylindrical sector (5) being formed by a thickening, and an external skin (9) of a composite material, in that a strap (10) of a material of high elastic modulus locks in at least the complementary sector (6), the strap (10) comprising at its ends securing means (11 to 15) constituted by buckles, the strap (10) and its end buckles (15) being formed by continuous winding of a fibre of high elastic modulus, the winding being flattened in its central region in such a way as to enable it to receive at its ends the buckles (15).

2. Structure according to claim 1, characterized in this that the fibre is of polyimide type.

3. Structure according to one of claims 1 and 2, characterized in this that the securing means are constituted by two buckles (15) provided at the ends of the strap, cooperating with side pieces (13) with ears (11, 12), at least two ears (11) being secured to the ends of the member (3) to be protected and two others (12) to the casing.

4. Structure according to one of claims 1 and 2, characterized in that the securing means are constituted by two combs (17-18) of the buckles formed at the ends of the strap (10) and by a joining pin (19) passing into the buckles.

## Patentansprüche

1. Schutzschild für das Gehäuse einer Turbomaschine, mit einem Ring, der eine Rotations-Schaufelstufe umgibt und der aus einer oder mehreren konzentrisch angeordneten Materialschichten besteht, die aus einem Bruch während des Betriebs stammende Energie von Teilen der Schaufelscheiben absorbieren und diese Teile zurückhalten können, dadurch gekennzeichnet, daß der Ring (4) einen zusammengesetzten Umfangsaufbau hat, mit einem aus einem metallischen Material hohen mechanischen Widerstandes bestehenden zylindrischen Hauptsegment (5), welches dazu dient, ein an dem Gehäuse befestigtes Glied (3) zu schützen, wobei das komplementäre Segment (6) des Ringes aus einer Wabenstruktur (8) besteht, welche zwischen einer Innenschale (7), die mit dem zylindrischen Hauptsegment (5) einen durchgehenden, aus einem Stück bestehenden zylindrischen Ring bildet, wobei der dem zylindrischen Hauptsegment (5) entsprechende Teil durch eine Verdickung gebildet ist, und einer Außenschale (9) aus einem Verbundmaterial festgehalten ist, daß ein Gurt (10) aus einem Material hohen Elastizitätsmoduls zumindest das komplementäre Segment (6) umschließt und an seinen Enden aus Schlaufen bestehende Befestigungsmittel (11 bis 15) aufweist, wobei der Gurt (10) und seine an den Enden vorgesehenen Schlaufen (15) durch durchgehendes Wickeln einer Faser hohen Elastizitätsmoduls gebildet sind, wobei die Wicklung in ihrem mittleren Bereich abgeflacht ist, daß an den Enden die Schlaufen (15) verbleiben.

2. Schutzschild nach Anspruch 1, dadurch gekennzeichnet, daß die Faser eine Faser vom Polyimid-Typ ist.

3. Schutzschild nach einem der Ansprüche 1 und 2, dadurch gekennzeichnet, daß die Befestigungsmittel durch zwei an den Enden des Gurtes vorgesehene Schlaufen (15) gebildet sind, die über Laschen (13) mit Ösen (11-12) zusammenwirken, wobei zumindest zwei Ösen (11) an den Enden des zu schützenden Gliedes (3) und zwei andere Ösen (12) am Gehäuse befestigt sind.

4. Schutzschild nach einem der Ansprüche 1 und 2, dadurch gekennzeichnet, daß die Befestigungsmittel durch zwei kammförmige Schlaufen (17-18), die an den Enden des Gurtes (10) gebildet sind, und einer durch die Schlaufen verlaufenden Verbindungsachse (19) gebildet sind.

FIG.:1

FIG.:2

FIG.: 3

FIG.: 4

FIG.: 5

2